# EUROPÄISCHE PATENTSCHRIFT

(11) **EP 0 829 675 B1**
(45) Veröffentlichungstag und Bekanntmachung des Hinweises auf die Patenterteilung: **21.01.2004**
(21) Anmeldenummer: 97115992.6
(22) Anmeldetag: 15.09.1997
(51) Int. Cl.: F16M 11/14

(54) **Stativ mit einer Halterung**
Support with mounting device
Support avec dispositif de fixation

(30) Priorität: 17.09.1996 DE 29616129 U
(43) Veröffentlichungstag der Anmeldung: 18.03.1998
(73) Patentinhaber: Bothe, Klaus, 82057 Icking (DE); Hiesinger, Reinhard, 87724 Ottobeuren (DE); Mann, Kurt, 87748 Fellheim (DE)
(72) Erfinder: Bothe, Klaus, 82057 Icking (DE); Hiesinger, Reinhard, 87724 Ottobeuren (DE)
(74) Vertreter: Pfister, Helmut, Dipl.-Ing.

(56) Entgegenhaltungen:
- DE-A- 2 840 059
- DE-A- 4 202 825
- FR-A- 881 607
- GB-A- 618 296

## Beschreibung

Die Erfindung betrifft ein Stativ mit einer Halterung, insbesondere für eine Kamera und dergleichen, wobei die Halterung über ein aus Kugel und Pfanne bestehendes Kugelgelenk mit dem Stativ verbunden ist und die Pfanne die Kugel bis über den Halbmesser hinaus U-förmig umgreift. Die Breite der Pfanne ist geringer als der Durchmesser der Kugel.

Derartige Stative sind in verschiedener Ausbildung bekannt geworden. In der DE-OS 4 202 825 wird ein Stativ beschrieben, bei dem die Kamerahalterung mittels eines Kugelgelenkes mit dem Stativ verbunden ist. Dabei übergreift die Pfanne des Kugelgelenkes die Kugel um mehr als die Hälfte, wodurch sich die Schwenkbarkeit des Kugelgelenkes sehr stark einschränkt. Auch ist eine vergleichsweise kleine Kugel vorgesehen, wodurch sich eine begrenzte Stabilität bei aufgesetzter Kamera ergibt.

Aus der FR-A-881 607 ist ein Kugelgelenk für eine Halterung offenbart, bei der zwei Arme eine Kugel klammerartig umgreifen und durch Zusammendrücken dieser beiden Arme mittels einer Schraube die Kugel fixieren. Durch Lösen der Schraube können diese beiden Arme so weit auseinander gespreizt werden, daß die Kugel herausgenommen werden kann. Bei einer derartigen Ausführung einer Halterung besteht die Gefahr, daß aufgrund des hohen Gewichtes der Kamera die Kugel bei gelösten Fixierund Arretiermitteln aus der Halterung rutscht. Des weiteren steht die Schraube der Beweglichkeit der von der Kugel getragenen Teile im wege.

Die Erfindung hat es sich deshalb zur Aufgabe gestellt, ein Stativ mit Halterung vorzusehen, die eine sichere Verbindung zwischen diesen Teilen schafft, wobei die Verschwenkbarkeit der von der Kugel getragenen Teile nicht eingeschränkt ist und die Teile zueinander in jeder Stellung fixierbar sind.

Dies wird erfindungsgemäß dadurch erzielt, daß die Pfanne im wesentlichen als Brücke ausgebildet ist, und an der Brücke gegen die Kugel drückende Elemente vorgesehen sind, zur Fixierung der Kugel gegenüber der Pfanne.

Vorteilhafterweise ist die Kugel fest mit dem Stativ und die Brücke fest mit der Kamerahalterung verbunden. Die Anordnung kann aber auch gegeneinander ausgetauscht werden, zum Beispiel ist dann die Brücke mit dem Stativ verbunden. So ergibt sich als einzig beweglicher Punkt zwischen Kamera und Stativ das Kugelgelenk. Hier wird eine optimale Verschwenkbarkeit durch die brückenartige Ausbildung erreicht, wobei die Brücke günstigerweise die Kugel auf zwei gegenüberliegenden Seiten bis über den Halbmesser hinaus umgreift und eine Aussparung für die Rundungen der Kugel aufweist. So sitzt die Brücke auch im nicht arretierten oder fixierten Zustand fest auf der Kugel und kann zwar verschwenkt werden, läßt sich aber nicht von der Kugel entfernen. Eine Verschwenkbarkeit der Halterung bzw. der aufgesetzten Kamera um mehr als 360° im gesamten Bereich der Kugel ist somit möglich.

Es ist von Vorteil, wenn die Brücke an ihrer Oberseite abgeflacht ist.

Die abgeflachte Oberseite nimmt vorteilhafterweise die Halterung für die Kamera auf und ihre Länge beträgt etwa das Doppelte des Kugeldurchmessers. Bei dieser einfachen Art der Kamerahalterung ist kein weiterer Arbeitsschritt mehr notwendig, um etwa Platten oder dergleichen auf die Pfanne des Kugelgelenkes aufzubringen.

Da die Kugel einen vergleichsweise großen Durchmesser aufweist, ergibt sich auch ohne weitere Hilfsmittel, wie etwa Platten oder dergleichen, eine optimale Auflagefläche für die Kamera auf der Oberseite der Brücke, bzw. die Platte oder Auflage, welche als Halterung der Kamera dient, ist in der Brücke integriert.

Als Halterung für die Kamera wird bei der bevorzugten Ausführungsform der Erfindung ein Zapfen mit Außengewinde vorgesehen. Ein solcher Zapfen wird in eine vorhandene Bohrung in der Oberseite der Brücke eingefügt und paßt in ein übliches Innengewinde an der Unterseite von Kameras. Durch entsprechende Ausbildung der Auflagefläche an der Oberseite kann eine weitere Stabilisierung der Kamera erreicht werden. Durch ein Rändelrad wird der Zapfen mit Gewinde in eine entsprechende Bohrung an der Kamera eingedreht, und diese dadurch befestigt.

Bei der bevorzugten Ausführungsform der Erfindung sind zwei verschiedene Mittel, wie Griff mit Schraube und Rändelschraube zum Fixieren und Arretieren der Brücke auf der Kugel vorgesehen. Dabei dient der Griff mit Schraube zum Fixieren, wobei die Kamera in der gewünschten Position auch von Hand gehalten werden kann und die Rändelschraube arretiert die Kamera in der gewünschten Stellung, wenn sie beispielsweise für längere Zeit in der gleichen Position verbleiben soll.

Bei den bekannten Stativen ist die Vorrichtung zur Fixierung und die Vorrichtung zur Arretierung auf zwei verschiedenen Seiten des Kugelgelenkes angeordnet, so daß nach Arretieren und Fixieren des Gelenkes Pfanne und Kugel im ungünstigsten Fall nur über zwei Punkte verbunden sind. Das vermindert die Stabilität bei aufgesetzter Kamera.

Vorteilhafterweise sind die beiden Mittel zum Fixieren und Arretieren auf der selben Seite der Brücke angeordnet. Dadurch ergibt sich, daß, wenn sowohl Schraube als auch Rändelschraube angezogen sind und die Brücke auf der Kugel festhalten, eine vergleichsweise große Anlagefläche der Kugel an der Innenseite der Brücke. Da beide Schrauben von der gleichen Seite gegen die Kugel drücken, wird diese mit ihrer den Schrauben gegenüberliegenden Seiten an die Innenseite der Brücke gedrückt, die den Schrauben gegenüberliegt. Durch die vergrößerte Anlagefläche bei Arretierung der Brücke auf der Kugel ergibt sich eine höhere Stabilität gegen ein unbeabsichtigtes Verschwenken der Brücke. Die Reibung ist auf diese Weise deutlich erhöht.

Bei der bevorzugten Ausführungsform der Erfindung ist je eine Feststellschraube zum Fixieren und Arretieren vorgesehen.

Bei einer weiteren Ausführungsform der Erfindung genügt ein einziges Mittel zum Fixieren und Arretieren, wobei beispielsweise verschiedene Stellungen der Schraube zum Fixieren und Arretieren vorgesehen sein können. Diese Ausbildungsweise ist besonders einfach und günstig herzustellen und besitzt ebenfalls den Vorteil der erhöhten Reibung.

In der Zeichnung ist ein erfindungsgemäßes Ausführungsbeispiel eines Statives mit Kamerahalterung schematisch dargestellt. Es zeigen:

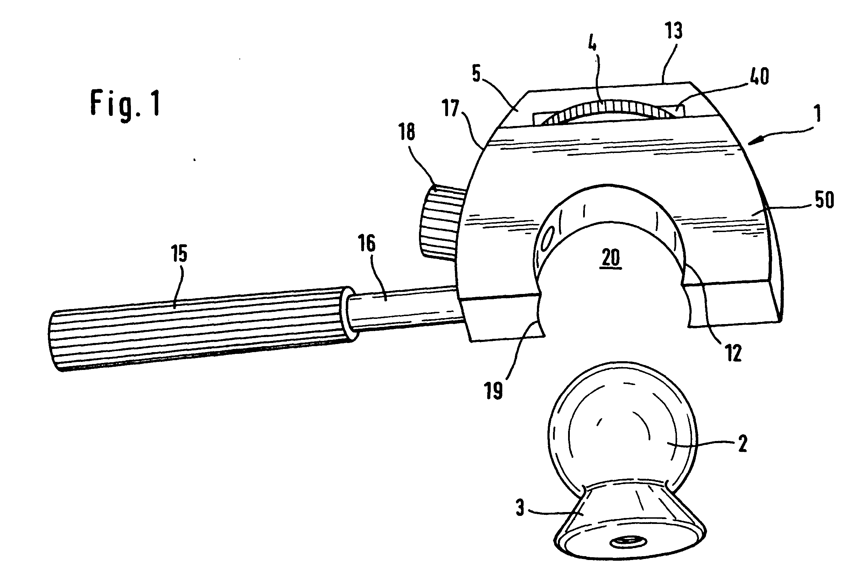

- Fig. 1: eine perspektivische Darstellung einer Kugel mit Brücke entsprechend der Erfindung,

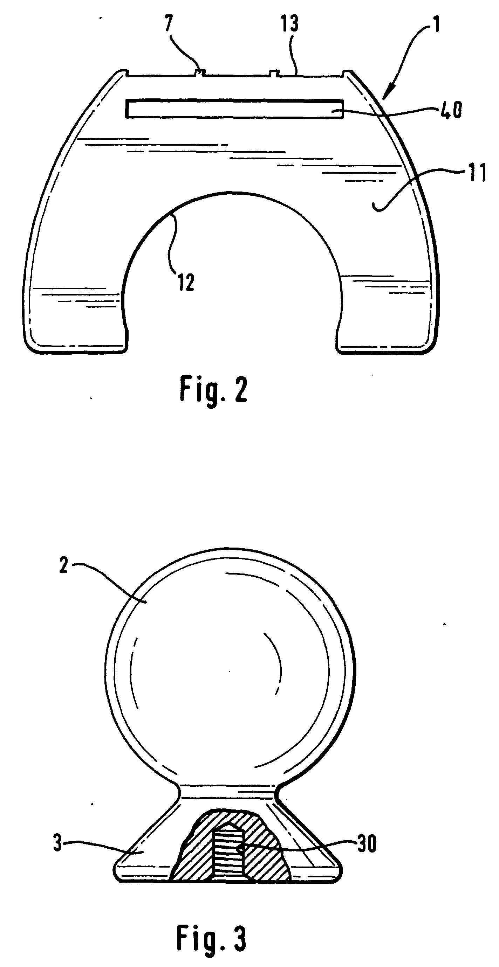

- Fig. 2: eine Seitenansicht einer Brücke gemäß der Erfindung,
- Fig. 3: eine Darstellung einer Kugel teilweise im Schnitt gemäß der Erfindung,

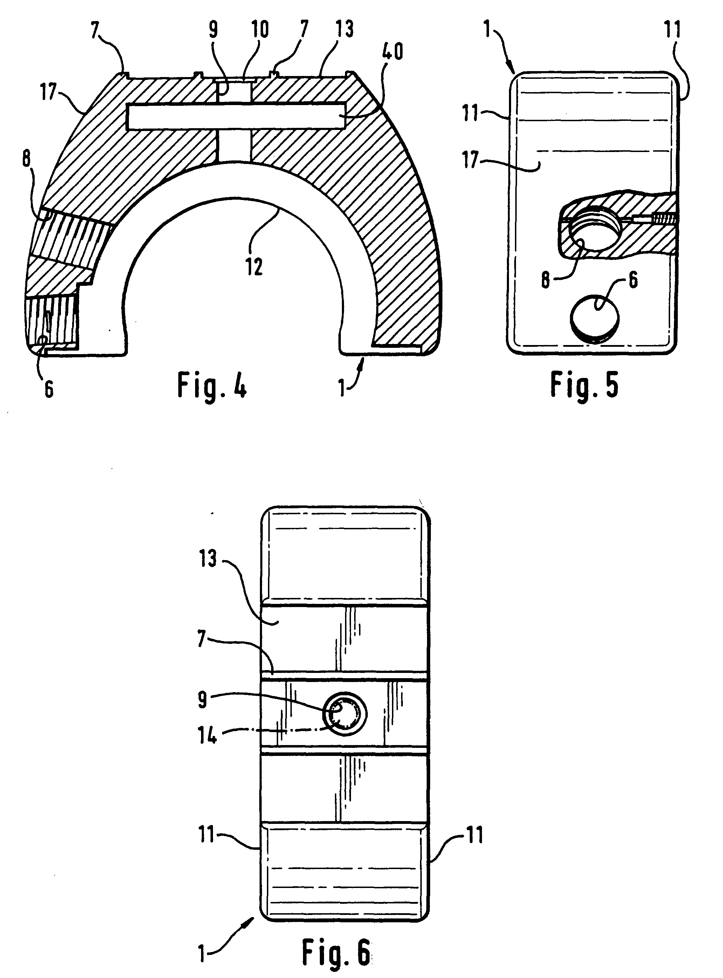

- Fig. 4: ein Schnitt durch eine Brücke gemäß der Erfindung,
- Fig. 5: eine Seitenansicht einer Brücke gemäß der Erfindung und
- Fig. 6: eine Draufsicht auf eine Brücke gemäß der Erfindung.

Auf dem Stativ sitzt die Kugel 2, wobei sich die Kugel 2 auf dem Stativ nicht bewegen läßt. Die Kugel 2 weist an ihrer Unterseite einen kegelartigen Sockel 3 auf, der eine Bohrung 30 mit Gewinde besitzt um die Kugel 2 mit einem nicht weiter dargestellten Stativ zu verbinden.

Die Brücke 1 weist eine Aussparung 12 auf, in die die Kugel 2 eingreift. Die Dimensionen der Kugel 2 bzw. die Breite der Brücke 1 ist hierbei so gewählt, daß die Seiten 20 der Kugel 2 über die Brücke 1 hervorstehen. Die Innenfläche 19 der Aussparung 12 der Brücke 1 ist sphärisch bzw. ballig ausgestaltet, um sich der Rundung der Kugel 2 optimal anzupassen. Hieraus resultiert eine freie Beweglichkeit der Brücke 1 auf der Kugel 2, wobei eine 360° Verdrehbarkeit um die Achse der Stativbefestigungsbohrung 30 möglich ist und eine Verkippung von beispielsweise mindestens 200° um eine horizontale Achse.

Auf der Kugel 2 ist als bewegliche Pfanne die Brücke 1 vorgesehen, die die Kugel 2 über ihren Halbmesser hinaus umgreift.

Zur Montage der Kamera ist die Oberseite 13 der Brücke abgeflacht und bildet ein Rechteck, dessen Länge etwa das Doppelte des Kugeldurchmessers beträgt. Die abgeflachte Oberseite 13 nimmt die Kamera auf, wobei diese mittels des Zapfens 14 auf der Oberseite (13) gehalten wird. Der Zapfen 14 bildet somit die Kamerahalterung 10 und läßt sich mit Hilfe des Rändelrades 4 drehen.

Das Rändelrad 4 sitzt im Schlitz 40, so daß es frei beweglich ist, wobei der Schlitz 40 beispielsweise als Ausnehmung eines Aufsatzes 5 vorgesehen wird. Aufsatz 5 und Hauptteil 50 bilden somit die Brücke 1 und werden beispielsweise durch Schrauben oder dergleichen an der abgeflachten Oberseite 13 miteinander verbunden. Die Brücke 1 kann aber auch einstückig ausgeführt sein, wobei die Halterung der Kamera oder dergleichen anders ausgeführt ist.

Durch das Rändelrad 4 läßt sich die Kamera auf die Kamerahalterung 10 aufschrauben, ohne daß die Kamera gedreht werden muß. Dies ist insbesondere bei schweren Kameras von Vorteil. Das Außengewinde des Zapfen 14 entspricht dabei dem Innengewinde, wie es üblicherweise an der Kameraunterseite angeordnet ist. Auf der Halterung 10 sind zum Beispiel auch Schnellwechslerplatten und dergleichen befestigt, welche dann die Kamera oder sonstige Elemente, zum Beispiel Blitzgerät, Scheinwerfer oder dergleichen aufnehmen.

Zum Fixieren der Brücke 1 auf der Kugel 2 ist der Griff 15 mit Schraube 16 vorgesehen, wobei für die Schraube 16 die Bohrung 6 vorgesehen ist. Durch Drehen am Griff 15 wird eine Fixierung der Brücke 1 auf der Kugel 2 erreicht, so daß die Kamera nicht mehr bewegt werden kann. Der Griff 15 ist zur Fixierung ebenso wie zum Schwenken der Kamera vorgesehen und weist eine Riffelung an der Oberseite auf. Soll die Kamera für längere Zeit in der gleichen Position bleiben, wird sie mit Hilfe der Rändelschraube 18 arretiert. Für die Rändelschraube 18 ist die Bohrung 8 auf der gleichen Seite 17 der Brücke 1 wie die Bohrung 6 vorgesehen. Beim Fixieren wird mit Hilfe der Schraube 16 die Kugel 2 nur leicht gegen die Brücke 1 gedrückt und zwar gegen denjenigen Teil der Brücke, der zwischen den Aussparungen 12 der Bohrung 6 gegenüber liegt. Beim Arretieren, das heißt beim Feststellen des Kugelgelenkes drückt eine weitere Rändelschraube 18 die Kugel 2 von der gleichen Seite gegen die Innenseite der Brücke 1. Auf diese Weise ergibt sich eine vergleichsweise große Anlagefläche der Kugel 2 an der Brücke 1.

Desweiteren ist auch vorgesehen, daß an den Arretier- bzw. Fixiermitteln eine Platte vorgesehen ist, die gegen die Kugel drückt und somit in dem Bereich einer größeren Fläche die Feststellung bewirkt.

Bei einer weiteren nicht näher dargestellten Ausführungsform der Erfindung genügt beispielsweise eine einzige Schraube, die in zwei Stellungen das Kugelgelenk sowohl fixiert als auch arretiert.

Die abgeflachte Oberseite 13 der Brücke 1 weist beispielsweise eine Riffelung 7 auf, die dazu dient die Kamera in der gewünschten Position zu halten. Auch durch geeignete Auflagen auf der Oberseite 13, wie beispielsweise Gummi, Kunststoffmaterial oder dergleichen kann ein derartiger Effekt erreicht werden. Für den Zapfen 14 ist in der Oberseite 13 die Bohrung 9 vorgesehen, die in den Schlitz 40 mündet, in dem das Rändelrad 4 sitzt.

Die Kanten und Ecken der Brücke werden vorteilhafterweise leicht abgerundet, was ein gefälliges Äußeres sowie eine Verringerung der Verletzungsgefahr ergibt. Brücke und Kugel bestehen vorzugsweise aus Metall, während Griff 15, Rändelschraube 18 und Rändelrad 4 beispielsweise aus Kunststoffmaterial ausgeführt sind.

Für die Herstellung der Brücke ist zum Beispiel vorgesehen, ein im wesentlichen U-förmiges extrudiertes Teilprofil zu verwenden, in welche die sphärischen, bzw. balligen Innenflächen eingearbeitet werden.

Für die Montage des Kugelgelenkes, also der Brücke 1 auf der Kugel 2 ist zum Beispiel vorgesehen, daß der Unterbereich der Brücke, welche über den Halbmesser der Kugel 2 greift, abnehmbar ausgestaltet ist, also zum Beispiel durch Schrauben oder dergleichen mit der Brücke befestigt wird.

Eine andere Möglichkeit besteht darin, die Brücke aus zwei im wesentlichen identischen, U-förmigen Teilen zu fertigen, wobei beide Teile nur eine einseitig geneigte Innenfläche aufweisen, die im zusammengefügten Zustand die ballige bzw. sphärische Innenfläche 12 ergeben.

Der Einsatz des erfindungsgemäßen Statives ist nicht nur im Bereich der Fotografie möglich, sondern findet zum Beispiel auch bei der Verwendung von Scheinwerfern oder Lautsprechern Verwendung, die mit Hilfe des Statives auf schnelle Art und Weise in beliebige Ausstrahlrichtungen eingerichtet und fixiert werden sollen.

Es ist aber auch möglich, das Kugelgelenk entsprechend der Gestaltung der Erfindung zum Beispiel im Gerüstbau oder dergleichen zu verwenden, wobei dann das Gerüst usw. als Stativ wirkt.

Die Stabilität des Statives wird dadurch erreicht, daß eine verhältnismäßig große Kugel 2 Verwendung findet. Im Bezug auf die Verwendung bei Kameras ist zum Beispiel vorgesehen, daß die Kugel durchaus einen Durchmesser entsprechend der drittelten oder halben Längskantenlänge der Grundplatte der Kamera aufweist. Durch die verhältnismäßig große Ausgestaltung wird eine übertragung von Erschütterungen, Schwingungen und dergleichen zuverlässig vermieden.

Es ist vorgesehen, dass die Brücke eine Breite aufweist, die weniger als dem Durchmesser der Kugel entspricht. Durch einen entsprechend schmalen Aufbau wird der Verschwenkbereich um eine horizontale Achse erhöht. Dies wird auch erreicht, wenn die seitlichen Flächen der Brücke, die ja die Kugel haltend umgreifen, nicht parallel sondern im Rundbereich zulaufend ausgestaltet sind.

## Patentansprüche

1. Stativ mit einer Halterung, insbesondere für eine Kamera und dergleichen, wobei die Halterung (10) über ein aus Kugel und Pfanne bestehendes Kugelgelenk mit dem Stativ verbunden ist, und die Pfanne die Kugel (2) bis über den Halbmesser hinaus U-förmig umgreift und die Breite der Pfanne geringer ist als der Durchmesser der Kugel (2), **dadurch gekennzeichnet, daß** die Pfanne im Wesentlichen als Brücke ausgebildet ist und an der Brücke (1) gegen die Kugel (2) drückende Elemente (16, 18) vorgesehen sind zur Fixierung der Kugel (2) gegenüber der Pfanne.

2. Stativ nach Anspruch 1, **dadurch gekennzeichnet, daß** die Brücke (1) aus zwei im wesentlichen identischen U-förmigen Teilen besteht, die die Kugel (2) zwischen sich aufnehmen.

3. Stativ nach Anspruch 1, **dadurch gekennzeichnet, daß** der Bereich der Brücke (1), der über den Halbmesser der Kugel (2) greift, abnehmbar ausgestaltet ist.

4. Stativ nach einem oder beiden der Ansprüche 2 oder 3, **dadurch gekennzeichnet, daß** die Teile der Brücke (1) mittels Schrauben miteinander verbunden sind.

5. Stativ nach einem oder mehreren der vorhergehenden Ansprüche, **dadurch gekennzeichnet, daß** zur Fixierung bzw. Arretierung der Brücke (1) gegenüber der Kugel (2) wenigstens ein Mittel (16,18) vorgesehen ist, das die Kugel (2) gegen die Innenfläche (19) der Brücke (1) drückt.

6. Stativ nach Anspruch 5, **dadurch gekennzeichnet, daß** als Mittel zum Fixieren und Arretieren zwei Mittel, insbesondere ein Griff (15) mit Schraube (16) und eine Rändelschraube (18) vorgesehen sind.

7. Stativ nach einem oder beiden der Ansprüche 5 und 6, **dadurch gekennzeichnet, daß** die beiden Mittel (16,18) zum Fixieren und Arretieren auf der selben Seite (17) der Brücke (1) angeordnet sind.

8. Stativ nach einem oder mehreren der Ansprüche 5 bis 7, **gekennzeichnet durch** je eine Feststellschraube (16,18) zum Fixieren und Arretieren.

9. Stativ nach Anspruch 5, **gekennzeichnet durch** ein einziges Mittel zum Fixieren und Arretieren.

10. Stativ nach einem oder mehreren der Ansprüche 1 bis 9, **dadurch gekennzeichnet, daß** die Kugel (2) lösbar oder fest mit dem Stativ und die Brücke (1) lösbar oder fest mit der Halterung (10) verbunden ist.

11. Stativ nach Anspruch 1, **dadurch gekennzeichnet, daß** die Kugel (2) lösbar oder fest mit der Halterung (10) und die Brücke (1) lösbar oder fest mit dem Stativ verbunden ist.

12. Stativ nach einem oder mehreren der Ansprüche 1 bis 10, **dadurch gekennzeichnet, daß** die Brücke (1) an ihrer Oberseite (13) abgeflacht ist. Z

13. Stativ nach Anspruch 12, **dadurch gekennzeichnet, daß** die Länge der abgeflachten Oberseite (13) maximal etwa das Doppelte des Kugeldurchmessers beträgt.

14. Stativ nach einem oder beiden der Ansprüche 12 und 13, **dadurch gekennzeichnet, daß** die abgeflachte Oberseite (13) die Halterung (10) für die Kamera aufnimmt.

15. Stativ nach einem oder mehreren der Ansprüche 12 bis 14, **dadurch gekennzeichnet, daß** ein Zapfen (14) mit Außengewinde als Halterung (10) vorgesehen ist.

## Claims

1. Stand with a holding device, in particular for a photo camera and the like, the holding device (10) being connected with the stand via a ball-and-socket joint comprising a ball and a ball socket, and the ball socket overlapping the ball (2) beyond the radius in a U-shaped way and the width of the ball socket being smaller than the diameter of the ball (2), **characterised in that** the ball socket is essentially shaped as a bridge and that elements (16, 18) are provided at the bridge (1) which press against the ball (2) in order to fasten the ball (2) against the ball socket.

2. Stand according to claim 1, **characterised in that** the bridge (1) comprises two essentially identical U-shaped parts which hold the ball (2) between each other.

3. Stand according to claim 1, **characterised in that** the region of the bridge (1), which overlaps the radius of the ball (2), can be removed.

4. Stand according to one or both of the preceding claims 2 or 3, **characterised in that** the parts of the bridge (1) are connected with each other by means of screws.

5. Stand according to one or more of the preceding claims, **characterised in that** for fastening, respectively stopping, the bridge (1) toward the ball (2) at least one means (16, 18) is provided which presses the ball (2) against the inner surface (19) of the bridge (1).

6. Stand according to claim 5, **characterised in that** as a means for fastening and stopping two means are provided, in particular a handle (15) with screw (16) and a knurled screw (18).

7. Stand according to one or both of the claims 5 and 6, **characterised in that** the two means (16, 18) for fastening and stopping are arranged on the same side (17) of the bridge (1).

8. Stand according to one or more of the claims 5 to 7, **characterised by** a locking screw (16, 18) each for fastening and stopping.

9. Stand according to claim 5, **characterised by** a single means for fastening and stopping.

10. Stand according to one or more of the claims 1 to 9, **characterised in that** the ball (2) is connected releasably or fixed with the stand, and the bridge (1) is connected releasably or fixed with the holding device (10) .

11. Stand according to claim 1, **characterised in that** the ball (2) is connected releasably or fixed with the holding device (10), and the bridge (1) is connected releasably or fixed with the stand.

12. Stand according to one or more of the claims 1 to 10, **characterised in that** the bridge (1) is flattened on its upper side (13).

13. Stand according to claim 12, **characterised in that** the length of the flattened upper side (13) is up to a maximum of about double of the diameter of the ball.

14. Stand according to one or both of the claims 12 and 13, **characterised in that** the flattened upper side (13) holds the holding device (10) for the camera.

15. Stand according to one or more of the claims 12 to 14, **characterised in that** a peg (14) with an external thread is provided as holding device (10).

## Revendications

1. Support avec fixation destiné en particulier à un appareil photographique ou un appareil analogue, ladite fixation (10) est liée au support par une articulation constituée d'une sphère et d'un logement ayant la forme d'un U dont les branches couvrent plus que la demi-circonférence de la sphère (2) et dont l'épaisseur est inférieure au diamètre de la sphère (2), **caractérisé en ce que** le logement possède principalement la forme d'un pont et **en ce que** ce pont (1) comporte des éléments (16, 18) s'appuyant contre la sphère (2) permettant ainsi d'immobiliser cette sphère (2) par rapport à son logement.

2. Support selon la revendication 1, **caractérisé en ce que** le pont (1) consiste en deux éléments en forme de U, quasiment identiques, entre lesquels se trouve la sphère (2).

3. Support selon la revendication 1, **caractérisé en ce que** la partie du pont (1) dépassant la demi-circonférence de la sphère (2) est amovible.

4. Support selon une ou deux des revendications 2 et 3, **caractérisé en ce que** les éléments du pont (1) sont fixés ensemble par des vis.

5. Support selon une ou plusieurs des revendications précédentes, **caractérisé en ce que** la fixation ou l'immobilisation du pont (1) par rapport à la sphère (2) est obtenue à l'aide d'au moins un moyen (16, 18) appuyant la sphère (2) contre la partie inférieure (19) du pont (1).

6. Support selon la revendication 5, **caractérisé en ce que** le moyen de fixation ou de l'immobilisation comprend deux éléments et en particulier une anse (15) avec une vis (16) et une vis de serrage manuel (18).

7. Support selon une ou deux des revendications 5 et 6, **caractérisé en ce que** les deux éléments (16, 18) de fixation et d'immobilisation sont situés sur le même côté (17) du pont (1).

8. Support selon une ou plusieurs des revendications 5 à 7, **caractérisé par** l'existence d'une vis de fixation et d'une vis d'immobilisation (16, 18).

9. Support selon la revendication 5, **caractérisé en ce qu'**il n'existe qu'un seul élément pour la fixation et l'immobilisation de la sphère.

10. Support selon une ou plusieurs des revendications 1 à 9, **caractérisé en ce que** la sphère (2) est liée de manière amovible ou fixe au support et **en ce que** le pont (1) est lié de manière amovible ou fixe à la fixation (10).

11. Support selon la revendication 1, **caractérisé en ce que** la sphère (2) est liée de manière amovible ou fixe à la fixation (10) et **en ce que** le pont (1) est lié de manière amovible ou fixe au support.

12. Support selon une ou plusieurs des revendications 1 à 10, **caractérisé en ce que** la partie supérieure (13) du pont (1) est aplatie.

13. Support selon la revendication 12, **caractérisé en ce que** la longueur de la partie supérieure aplatie (13) ne dépasse pas environ le double du diamètre de la sphère.

14. Support selon une ou deux des revendications 12 et 13, **caractérisé en ce que** la face supérieure aplatie (13) comprend la fixation (10) pour l'appareil photographique.

15. Support selon une ou plusieurs des revendications 12 à 14, **caractérisé en ce qu'**une tige filetée (14) sert comme fixation (10).
